# EUROPÄISCHE PATENTSCHRIFT

(11) **EP 0 495 237 B1**
(45) Veröffentlichungstag und Bekanntmachung des Hinweises auf die Patenterteilung: **02.03.1994**
(21) Anmeldenummer: 91122054.9
(22) Anmeldetag: 21.12.1991
(51) Int. Cl.: A01C 17/00

(54) **Verfahren zum Einstellen der Dosierorgane einer Verteilmaschine**
Method for controlling the dosing means of a distributor
Méthode de réglage des doseurs d'un distributeur

(30) Priorität: 18.01.1991 DE 4101367
(43) Veröffentlichungstag der Anmeldung: 22.07.1992
(73) Patentinhaber: Amazonen-Werke H. Dreyer GmbH & Co. KG, D-49205 Hasbergen (DE)
(72) Erfinder: Scheufler, Bernd, Dr. Ing., W-4507 Hasbergen (DE)

(56) Entgegenhaltungen:
- EP-A- 0 309 062
- EP-A- 0 402 712
- DE-A- 3 217 010
- DE-B- 2 835 011

## Beschreibung

Die Erfindung betrifft ein Verfahren zum Einstellen der Dosierorgane einer Verteilmaschine, sowie eine entsprechende Verteilmaschine zur Durchführung dieses Verfahrens.

In der Praxis sind eine Anzahl von Verteilmaschinen, wie beispielsweise Schleuderdüngerstreuer, Drillmaschinen, Straßenstreuer etc. bekannt geworden, bei denen vor Beginn der Ausbringarbeit eine sog. Abdrehprobe durchgeführt wird, um die tatsächliche Ausbringmenge festzustellen. Die Ausbringmenge ändert sich bei den verschiedenen auszubringenden Materialien je nach Materialsorte und Beschaffenheit, so daß bei gleicher Einstellung der Maschine unterschiedliche Mengen von Material je nach Materialsorte ausgebracht werden.

So ist es beispielsweise durch die DE-B-28 35 011 bekannt, bei einem Schleuderdüngerstreuer die Verteilorgane, hier die Schleuderscheiben, abzunehmen, um dann die Abdrehprobe in einfacher Weise durchführen zu können. Bei der Abdrehprobe rieselt dann das Material von den Dosierorganen, die jeweils von einer Auslauföffnung mit einem Schieber gebildet werden, in einen darunter angeordneten Auffangbehälter. Diese Abdrehmethode hat sich bei den Maschinen bewährt, bei denen sich ohne aufwendige Demontage des Vorratsbehälters und ohne Entleeren des Vorratsbehälters einfach durch Abnahme der Schleuderscheiben die Abdrehprobe durchführen läßt.

Weiterhin ist es bei Drillmaschinen allgemein zum Zwecke der Abdrehprobe geläufig, die Saatleitungsrohre unterhalb der Dosierorgane wegzuschwenken und anstelle der Saatleitungsrohre Abdrehmulden anzuordnen, in welche bei der Abdrehprobe das von den Dosierorganen ausgebrachte Material aufgefangen wird, welches dann anschließend gewogen werden kann. Hierdurch läßt sich in einfacher Weise die tatsächliche Ausbringmenge feststellen und die Maschine entsprechend einstellen.

Weiterhin ist es durch durch DE-A-32 17 010 bekannt, während der Ausbringarbeit laufend die Ausbringmengen mittels eines zusätzlichen Dosierorganes zu überwachen. Diese Methode ist bei Drillmaschine durchaus praktikabel, so daß dann fortlaufend die Ausbringmenge während der Säarbeit überwacht werden kann.

Bei Verteilmaschinen, insbesondere bei Schleuderdüngerstreuern, bei denen die Verteilorgane nicht abgenommen werden können bzw. bei Drillmaschinen, bei denen die Saatleitungsrohre unterhalb der Dosierelemente nicht entfernt werden können, müssen aufwendige Auffangvorrichtungen verwendet werden, um die Abdrehprobe durchführen zu können.

Der Erfindung liegt daher die Aufgabe zugrunde, ein einfaches Verfahren sowie eine ensprechende Vorrichtung vorzuschlagen, mit welchem sehr einfach die Einstellung der Dosierorgane der Verteilmaschine für die gewünschte Menge der auszubringenden Materialsorten gefunden werden kann.

Diese Aufgabe wird erfindungsgemäß dadurch gelöst, daß die Abdrehprobe an einem separaten Dosierorgan durchgeführt wird und die hierbei gefundenen Werte auf die Einstellung der Dosierorgane der Verteilmaschine übertragen werden. Infolge dieser Maßnahme läßt sich also auf äußerst einfache Weise auch bei den Maschine, bei denen das eigentliche Dosierorgan nur sehr schwer zugänglich ist bzw. die von diesem eigentlichen Dosierorgan ausgebrachte Menge an sich relativ schlecht in ein Auffangbehälter bei Durchführung der Abdrehprobe geleitet werden kann, die Abdrehprobe sehr einfach durchführen. Es werden also bei diesem erfindungsgemäßen Verfahren die materialspezifischen Eigenschaften für die Einstellung des Dosierorganes berücksichtigt. Überraschender Weise hat sich gezeigt, daß es ohne weiteres möglich ist, die bei einem separaten Dosierorgan gefundenen Werte bei der Abdrehprobe auf die Dosierorgane der Verteilmaschine zu übertragen, so daß eine einwandfreie Einstellung der eigentlichen Dosierorgane der Verteilmaschine auf der Grundlage dieser Werte möglich ist. Hierbei wird erfindungsgemäß so vorgegangen, daß die an dem separaten Dosierorgan gefundenen Werte mittels eines Umrechnungsverfahrens auf die Werte zum Einstellen der Dosierorgane der Verteilmaschine umgewandelt werden.

Hierbei sieht das Verfahren zur Durchführung des Abdrehvorganges bei einer Verteilmaschine mit Dosierorganen, die das auszubringende Material Verteilorganen in einstellbaren Mengen zuführen, wobei für den Abdrehvorgang ein separates Dosierorgan vorgesehen, erfindungsgemäß vor, daß aufgrund der beim Abdrehen am separaten Dosierorgan gefundenen Werte auf die einzustellenden Einstelldaten der den Verteilorganen zugeordneten Dosierorganen geschlossen wird und diese dann aufgrund der ermittelten Einstelldaten eingestellt werden. Über die beim Abdrehvorgang an dem separaten Dosierorgan gefundenen Werte läßt sich in überraschender Weise sehr einfach und genau auf die Einstelldaten für die Dosierorgane der Verteilmaschine für gewünsche Menge schließen.

Um eine exakte Zuordnung zwischen Abdrehprobenwert und einzustellenden Wert an den Dosierorganen der Verteilmaschine zu erhalten, ist erfindungsgemäß vorgesehen, daß die für verschiedene Materialien beim Eichen des für den Abdrehvorgang vorgesehenen Dosierorganen gefundenen Werte in Bezug zu den beim Eichvorgang für die den Verteilorganen zudosierten Dosierorganen gefundenen Werte gesetzt werden, und daß die Dosierorgane aufgrund der Beziehung der beim Abdrehen gefundenen Werte eingestellt werden.

Weiterhin ist erfindungsgemäß vorgesehen, daß die Dosierorgane durch als Schieber zur öffenende und zu schließende Auslauföffnungen ausgebildet sind, daß ein funktioneller Zusammenhang gebildet wird, zwischen dem Auslaufverhalten bei der separaten Auslauföffnung sowie dem Auslaufverhalten bei den den Verteilorganen zugeordneten Auslauföffnungen. In überraschender Weise hat sich gezeigt, daß gleichbleibende funktionale Zusammenhänge zwischen der vom separaten Dosierorgan dosierten Menge und der von den eigentlichen Dosierorganen dosierten Menge bestehen, selbst wenn diese Dosierorgane unterschiedlich angeordnet sind und nicht identisch ausgebildet sind, und die somit sehr einfach ausgenutzt werden kann, um in einer Tabelle oder ein Nomogramm etc. entsprechend dargestellt zu werden, aus welchem dann über den beim Abdrehen gefundenen Mengenwert und der gewünschten auszubringenden Menge die Einstellung des Dosierorgans der Verteilmaschine abgelesen werden kann. Eine sehr einfache Durchführung der Abdrehprobe in Verbindung mit dem Nomogramm ergibt sich dadurch, daß an der für das Abdrehen vorgesehenen Auslauföffnung nur eine einzige Einstellung vorgesehen ist, und daß mit dem beim Abdrehen gefundenen Wert bzgl. des Auslaufverhaltens die Einstellwerte für die den Verteilorganen zugeordneten Auslauföffnungen ermittelt werden.

Wichtig ist bei Erstellung und Verwendung des Nomogramms, daß der Flächenquerschnitt oder bei einstellbaren separaten Dosieröffnungen die verwendete Einstellung festgehalten und angegeben wird. Jedes Nomogramm hat also nur für eine Einstellung des separaten Dosierorganes Gültigkeit. Selbstverständlich ist auch möglich, diese Daten in einen Computer etc. einzugeben.

Zur Durchführung des Verfahrens nach einem oder mehreren der Ansprüche 1 bis 5 ist eine Verteilmaschine vorgesehen, die einen Vorratsbehälter mit Dosierorganen aufweist, über welche das auszubringende Material unterhalb den Dosierorganen angeordneten Verteilorganen zugeführt wird, wobei zusätzlich zu den die Verteilorgane zugeordneten Dosierorgane ein separates Dosierorgan zum Durchführen der Abdrehprobe vorgesehen ist, wobei dieses Dosierorgan als mit einem Schieber zu öffende und verschließende Auslauföffnung ausgebildet ist, und daß die den Verteilorganen zugeordneten Dosierorgane als über Schieber in ihrer Öffnungsweite einstellbare Auslauföffnungen ausgebildet sind. Infolge dieser Maßnahmen werden beim Abdrehen mittels des separaten Dosierorgans sämtliche materialspezifischen Einflußfaktoren berücksichtigt, so daß dann die gefundenen Werte in einfacher Weise auf das den Verteilorganen zugeordnete Dosierorgan als Einstelldaten übertragen werden können. Hierbei hat sich herausgestellt, daß sich die erfindungsgemäße Methode insbesondere für Maschinen mit Dosierorganen eignet, deren Dosierorgane als mit Schieber zu öffende und zu verschließende Auslauföffnungen ausgebildet sind.

Eine sehr einfache Ausbildung ergibt sich dadurch, daß das separate Dosierorgan an der Verteilmaschine bzw. an dem Vorratsbehälter integriert angeordnet ist. Hierbei kann die Auslauföffnung des separaten Dosierorgans direkt in einer seitlichen Wand des Vorratsbehälters an gut zugänglicher Stelle angeordnet sein, wobei vor dieser Auflauföffnung der zugeordnete Schieber angeordnet ist. Das separate Dosierorgan läßt sich manuel oder über Fernbedienungseinrichtungen entsprechend der Maßnahmen gemäß der Ansprüche 10 bis 12 betätigen.

Weitere Einzelheiten der Erfindung sind den übrigen Ansprüchen, der Beispielsbeschreibung und den Zeichnungen zu entnehmen. Hierbei zeigen
- Fig. 1: eine als Schleuderdüngerstreuer ausgebildete Verteilmaschine in der Seitenansicht mit dem separaten Dosierorgan,
- Fig. 2: den Schleuderdüngerstreuer gemäß Fig. 1 mit separaten Dosierorganen in der Ansicht von hinten,
- Fig. 3: die Anordnung des separaten Dosierorganes mit Ablaufrutsche in der Ansicht von hinten und in vergrößertem Maßstab,
- Fig. 4: die Anordnung des separaten Dosieroragans an dem Vorratsbehälter des Schleuderdüngerstreuers in der Ansicht IV - IV in vergrößertem Maßstab,
- Fig. 5: das Nomogramm zur Ermittlung der Einstellungdaten der Dosierorgane der Verteilmaschine,

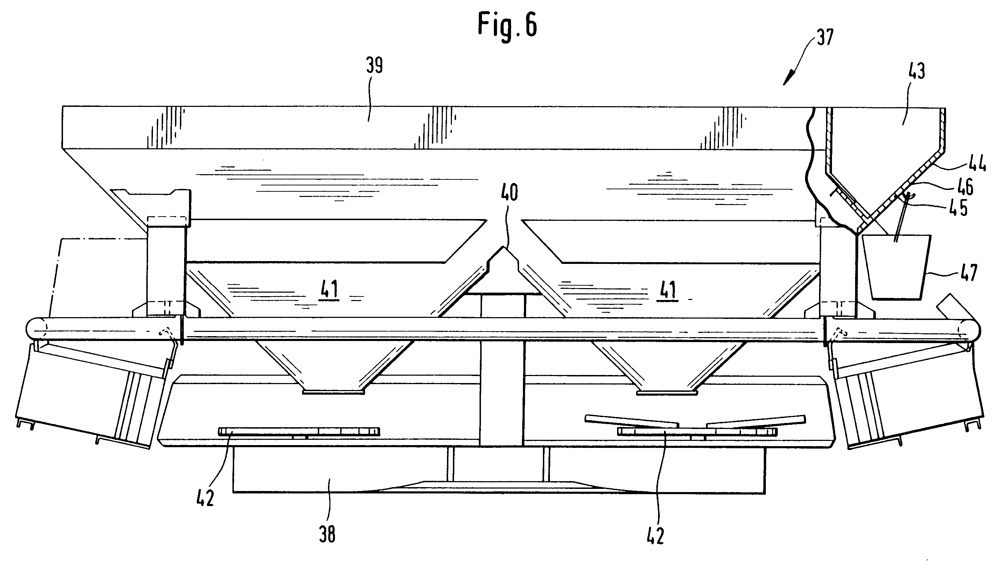

- Fig. 6: einen weiteren Schleuderdüngerstreuer mit separatem Dosierorgan in der Ansicht von hinten in Prinzipdarstellung und
- Fig. 7: einen weiteren Schleuderdüngerstreuer mit separaten Dosierorganen in der Ansicht von hinten in Prinzipdarstellung.

Die als Schleuderdüngerstreuer ausgebildete Verteilmaschine weist den Rahmen 1 und den Vorratsbehälter 2 auf. Auf der Vorderseite des Rahmens 1 sind die Dreipunktkupplungselemente 3 zum Anbau des Schleuderdüngerstreuers an den Dreipunktkraftheber eines Ackerschleppers angeschlossen. Der Vorratsbehälter 2 ist in seinem unteren Bereich durch das dachförmige Mittelteil 4 in die beiden Auslauftrichter 5 unterteilt. in dem jeweiligen dachfömigen Mittelteil sind die Auslauföffnungen 6 angeordnet. Vor den Auslauföffnungen 6 sind jeweils Schieber 7 angeordnet, mittels welcher die Auslauföffnungen in ihrer Öffnungsweite in bekannter Weise einzustellen bzw. zu verschließen sind. Die Auslauföffnungen 6 bilden in Verbindung mit den Schiebern 7 die Dosierorgane 8. Die Auslaßschieber 7 werden über das Gestänge 9 und die Hebel 10 betätigt. Mittels der Skalen 11 und der Anschlaghebel 12 lassen sich die Öffnungsstellungen der Schieber 7 und somit die Größe der Auslauföffnung 6 genau einstellen.

Unterhalb der Auslauföffnungen 6 sind die Schleuderscheiben 13 angeordnet, die die Verteilorgane bilden. Die Schleuderscheiben 13 werden in bekannter und daher nicht näher dargestellter Weise über ein Getriebe rotierend angetrieben. Die den Schleuderscheiben 13 von den Dosierorganen 8 zudosierten Düngemittel werden von den auf den Schleuderscheiben 13 angeordneten Wurfschaufeln 14 in Breitverteilung auf der Bodenoberfläche verteilt.

Für das Durchführen einer Abdrehprobe ist der Schleuderdüngerstreuer mit einer speziellen Abdrehvorrichtung 15 ausgestattet. Diese Abdrehvorrichtung 15 befindet sich seitlich am Vorratsbehälter 2. Diese Abdrehvorrichtung 15 ist ein separates Dosierorgan 16. Dieses separate Dosierorgan 16 dient ausschließlich der Durchführung der Abdrehprobe. Dieses separate Dosierorgan 16 weist die Auslauföffnung 17 und den Schieber 18 auf. Hierzu befindet sich in der Seitenwand 19 des Vorratsbehälters 2 die Auslauföffnung 17. Vor der Auslauföffnung 17 ist die Halterung 20 angeordnet. An der Halterung 20 ist die U-förmige Rutsche 21 sowie die Lasche 22 angeordnet. An der Lasche 22 ist mittels des Bolzens 23 der Schieber 18 drehbar gelagert. Zwischen der Seitenwand 19 und dem Schieber 18 befindet sich das Blech 24, in welchem sich ebenfalls die Auslauföffnung 18 des separaten Dosierorgans 16 befindet. Das Blech 24 ist an der Halterung 20 befestigt und somit Bestandteil der Halterung 20. Zwischen dem Schieber 18 und der rinnenartigen Rutsche 21 ist die Zugfeder 25 angeordnet, welche den Schieber 18 in Schließstellung zieht. Auf der Oberseite des Schiebers 18 ist das Zugseil 26 befestigt, mittels welchem zur Durchführung der Abdrehprobe der Schieber 18 betätigt wird, so daß die Auslauföffnung 17 während der Abdrehprobe vollkommen freigegeben wird.

Die Durchführung der Abdrehprobe und die Einstellung der Dosierorgane geschieht in folgender Weise:

Zunächst ist von entscheidender Bedeutung, daß die Schieber 7 für die Auslauföffnungen 6 während der Abdrehprobe geschlossen bleiben. Zunächst ist an dem Haken 27 der Meßeimer 28 einzuhängen. Somit ist sichergestellt, daß während der Abdrehprobe über die Rutsche 21 das Material in den Meßeimer 28 gelangt. Dann wird eine Meßstrecke unter Feldbedingungen exakt abgefahren, hierbei entspricht diese abzufahrende Meßstrecke vorzugsweise 1/40 ha unter Berücksichtigung der jeweils vorgesehenen Arbietsbreite. Am Beginn der Meßstrecke wird mit Hilfe des Seiles 26 der Schieber 18 in Öffnungsstellung gezogen, so daß das sich von im Vorratsbehälter befindliches Material über die Auslauföffnung 18 und die Rutsche 21 in den Meßeimer 28 gelangt. Am Ende der Meßstrecke wird das Seil 26 losgelassen, so daß der Schieber 18 die Auslauföffnung 17 wieder verschließt. Von entscheidender Bedeutung ist, daß während der Durchführung der Abdrehprobe, die Auslauföffnung 17 vollständig geöffnet ist, d.h., daß der Schieber 18 vollkommen aufgezogen sein muß.

Am Ende der Meßstrecke wird das Gewicht der im Meßbehälter aufgefangenen Düngermenge exakt ermittelt. Auch ist es möglich, anstelle eine bestimmte Meßstrecke abzufahren, daß die für das Bestreuen eines Sektors erforderliche Zeit ermittelt wird, und daß dann entsprechend dieser ermittelten Zeit der Schieber in Öffnungsstellung gezogen wird. Auch so läßt sich die Abdrehprobe durchführen.

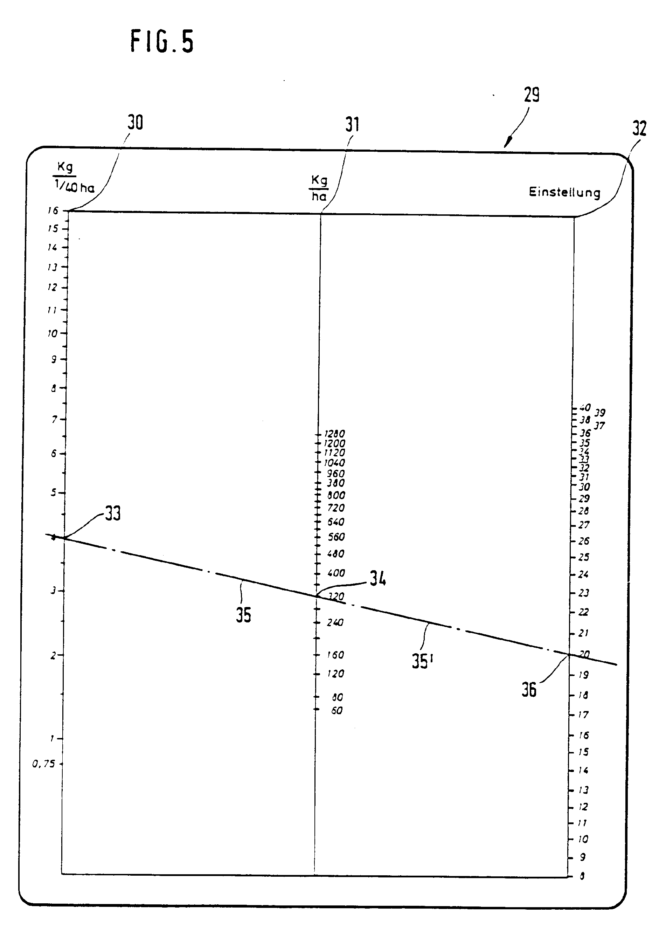

Auf der Rückseite des Vorratsbehälters 2 ist das in Fig. 5 dargestellte Diagramm 29 (Nomogramm) aufgeklebt. Dieses Nomogramm 29 weist die drei Skalen 30,31,32 auf. Auf der linken Skala 30 ist die dem separaten Dosierorgan 16 bei der Abdrehprobe aufgefangende Düngermenge in kg pro 1/4 ha aufgetragene Menge aufgetragen. Auf der mittleren Skala 31 ist die gewünschte Ausbringmenge in kg pro ha über die Dosierorgane 8 ausgetragen. Auf der rechten Skala 32 sind die Einstellwerte für die Schieber 7 bzw. die Anschlaghebel 12 für die Schieber 7 aufgetragen, um die gewünschte Ausbringmenge von Material ausbringen zu können Zwischen den Skalenwerten der einzelnen Skalen 30 bis 32 besteht ein bestimmter funktionaler Zusammenhang, welcher durch Eichvorgänge ermittelt wird. Dieses Nomogramm 29 gilt für sämtliche auszubringende Materialen, denn es besteht immer der im Nomogramm berücksichtigte funktionale Zusammenhang zwischen der am separaten Dosierorgan 16 bei der Abdrehprobe aufgefangenen Materialmenge und der tatsächlichen von den Dosierorgangen 8 den Verteilorganen zugeführten Menge von Material.

Die in diesem Diagramm 29 miteinander in Verbindung stehenden Werte der Skalen 30 bis 32 sind über ein Umrechnungsverfahren ermittelt worden. Hierzu sind die beim Abdrehen am separaten Dosierorgan 16 gefundenen Werte auf die einzustellenden Einstelldaten der den Verteilorganen 13 zugeordneten Dosierorgane 8 abgestimmt, so daß aus den beim Abdrehen ermittelten Werte auf die Einstelldaten der den Verteilorganen 13 zugeordneten Dosierorgane 8 für die gewünschte Ausbringmenge geschlossen werden kann, so daß dann aufgrund dieser durch das Abdrehen in Verbindung mit dem Diagramm 29 ermittelten Einstelldaten diese einzustellen sind. Hierbei sind die einzelnen Skalenwerte der Skalen 30 bis 32 des Diagrammes 29 für verschiedene Materialien der beim Eichen des für den Abdrehvorgang vorgesehen Dosierorgans 16 gefundenen Werte zu dem beim Eichvorgang für die den Verteilorganen 13 zudosierenden Dosierorganen 8 gefundenen Werte in Bezug gesetzt worden, so daß die Dosierorgane 8 aufgrund der Beziehungen der beim aktuellen Abdrehen gefundenen Werte einstellbar sind. Hierbei hat sich in überraschender Weise bei Abdrehversuchen gezeigt, daß man mit einer einzigen Öffnung beim Abdrehen auskommen kann und dann aufgrund der bei dieser separaten Dosieröffnung gefundenen Werte in Verbindung mit dem Diagramm 29 auf die aktuell einzustellenden Werte entsprechend der gewünschten Menge schließen kann. Somit braucht für das für das Abdrehen vorgesehene Dosierorgan 16 nur eine einzige Einstellung vorgesehen zu sein, so daß mit den beim Abdrehen gefundenen Wert bzgl. des Auslaufverhaltens die Einstellwerte für die den Verteilorganen zugeordneten Auslauföffnung ermittelt werden kann. Hierbei ist über das Diagramm 29 ein funktionaler Zusammenhang zwischen dem Auslaufverhalten des Materials bei der separaten Auslauföffnung 17 sowie dem Auslaufverhalten bei den den Verteilorganen zugeordneten Auslauföffnungen 6 hergestellt. Es wird also die Abdrehprobe ausschließlich an einem separaten gut zugänglichgen Dosierorgan 16 durchgeführt und die hierbei gefundenen Werte werden mittels des Diagrammes auf die Einstellung der Dosierorgane übertragen.

Mittels dieses Diagrammes läßt sich die genaue Einstellung der Schieber 7 der Dosierorgane 8 ermitteln. Hierzu werden die Punkte 33 und 34 das Gewicht der bei der Abdrehprobe aufgefangenen Düngermenge und der gewünschten Ausbringmenge in dem Diagramm 29 auf den Skalen 30 und 31 ermittelt. Anschließend wird durch diese beiden Punkte 33 und 34 eine Gerade 35 (siehe unten folgendes Beispiel) gelegt. Die Verlängerung 35' dieser Geraden 35 zeigt im Schnittpunkt 36 auf der rechten Skala 32 an, auf welchen Wert die Anschlaghebel 12 auf der Skala 11 eingestellt werden müssen.

Die Ermittlung der Einstelldaten für die Dosierorgane 8 durch das Diagramm 29 wird am folgenden Beispiel erläutert:

Beim Abdrehen an dem separaten Dosierorgan 16 ist die Düngermenge von 4 kg im Meßeimer 28 aufgefangen worden. Diese ergibt in dem Diagramm 29 auf der Skala 30 den Schnittpunkt 33. Mit der Verteilmaschine soll die Ausbringmenge von 320 kg Material (Dünger) pro ha ausgebracht werden. Dies ergibt den Schnittpunkt 34 auf der Skala 31. Um die für die gewünschte auszubringende Menge erforderliche Einstellung der Dosierorgane 8 (Stellung der Schieber 7 in ihrer Öffnungsstellung) zu finden, werden die Schnittpunkte 33 und 34 mit der Geraden 35 (dargestellt durch die strichpunktierte Linie) verbunden. Die Verlängerung 35' der Geraden 35 schneidet die Skala 32 im Schnittpunkt 32. Im Schnittpunkt 32 wird auf der Skala 32 der Einstellwert "20" für die Einstellung der Dosierorgane 8 abgelesen.

Der Schleuderdüngerstreuer 37 weist den Rahmen 38 und den Vorratsbehälter 39 auf. Auf der Vorderseite des Rahmens 38 sind in bekannter und daher nicht näher dargestellter Weise die Dreipunktkupplungselemente zum Anbau des Schleuderdüngerstreuers an den Dreipunktkraftheber eines Ackerschleppers angeordnet. Der Vorratsbehälter 39 ist in seinem unteren Bereich durch das dachförmige Mittelteil 40 in die beiden Auslauftrichter 41 aufgeteilt. Im unteren Bereich der jeweiligen Auslaufbehälter 41 sind die nicht dargestellten Auslauföffnungen in bekannter und daher nicht dargestellter Weise angeordnet. Unterhalb der Auslauföffnungen sind jeweils Schieber angeordnet, mittels welcher die Auslauföffnungen in ihrer Öffnungsweite in bekannter Weise einzustellen bzw. zu verschließen sind.

Unterhalb der Auslauföffnungen befinden sich die Schleuderscheiben 42, welche rotierend angetrieben werden und den sich im Vorratsbehälter 39 befindlichen Dünger, der ihnen über die Auslauföffnungen zudosiert wird, gleichmäßig verteilen.

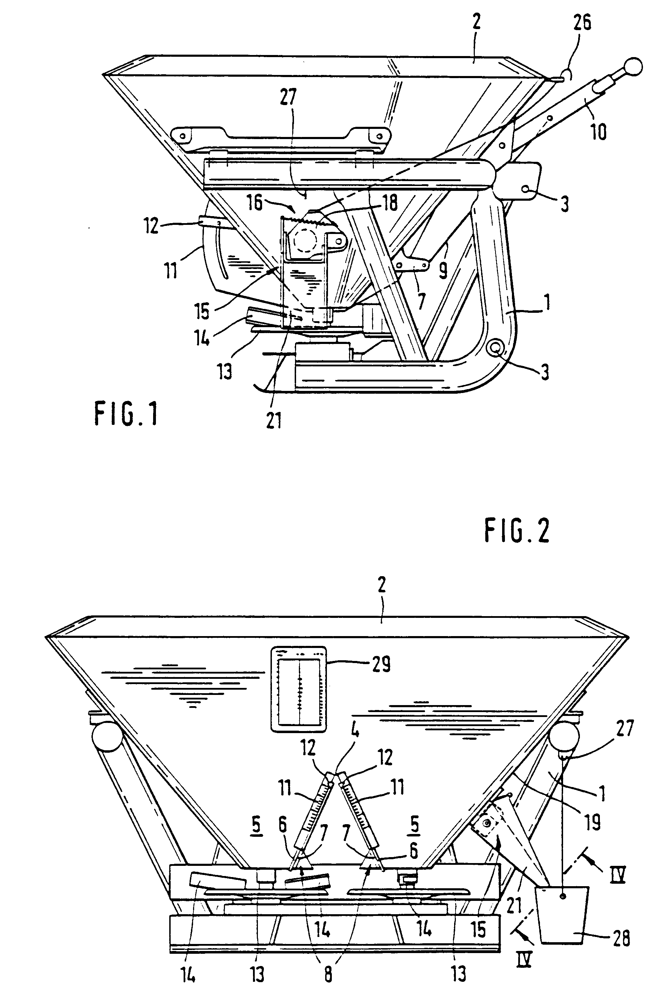

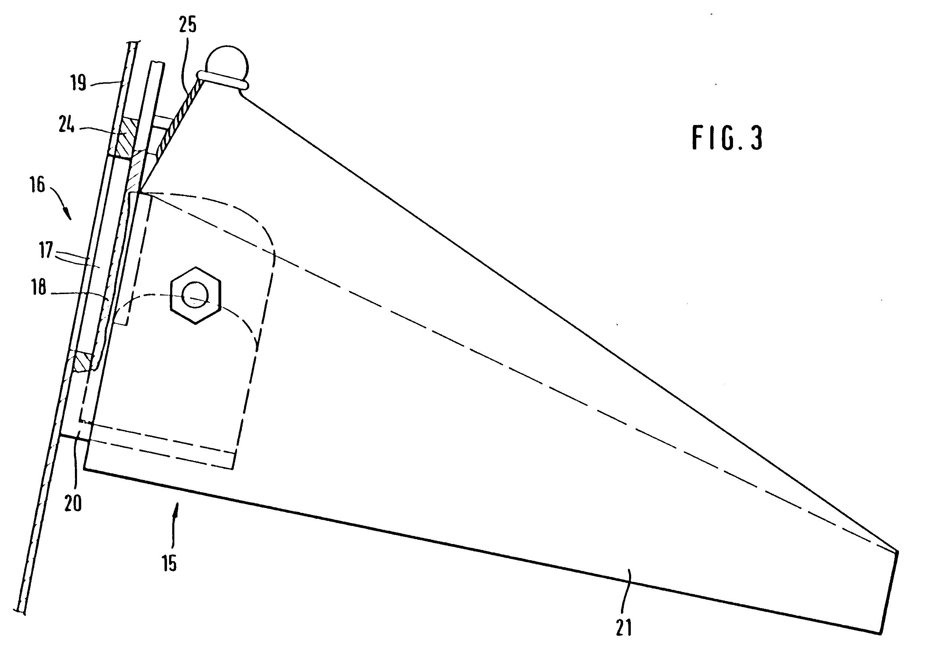

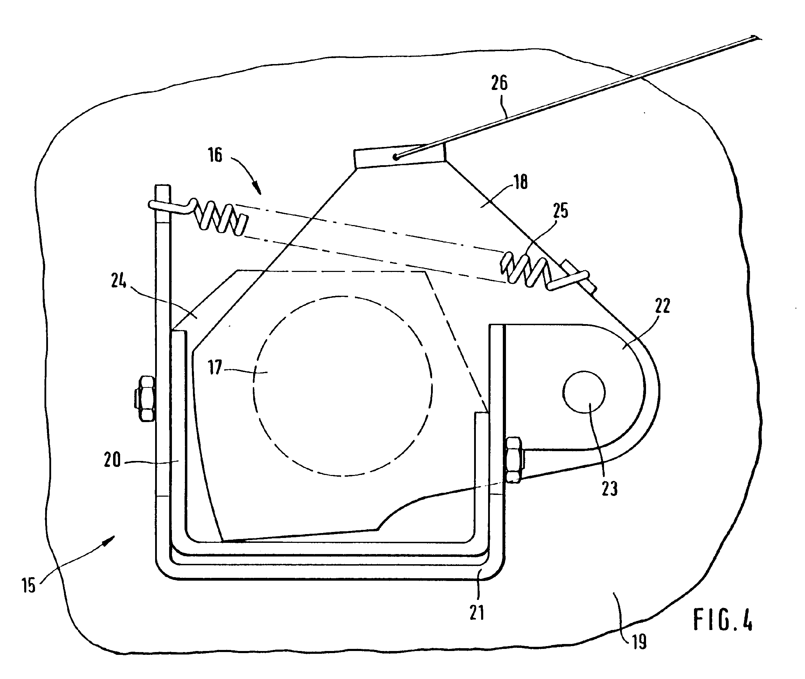

Zur Ermittlung des Fließverhaltens des Düngers bzw. zum Durchführen der Abdrehprobe ist in dem Vorratsbehälter 39 ein kleiner Vorratsbehälter 43 integriert angeordnet. Hierzu ist in der Vorratsbehälterwand 44 die Auslaßöffnung 45, die über einen Schieber 46 zu öffnen bzw. zu verschließen ist, angeordnet. Durch diese Vorrichtung wird eine separate Abdrehvorrichtung geschaffen. Unterhalb der Auslauföffnung 45 ist der Auffangbehälter 47 angeordnet. Die Abdrehprobe bzw. das Ermitteln des Fließverhaltens erfolgt hier, wie dieses gemäß dem Ausführungsbeispiel der Fig. 1 bis 5 beschrieben ist.

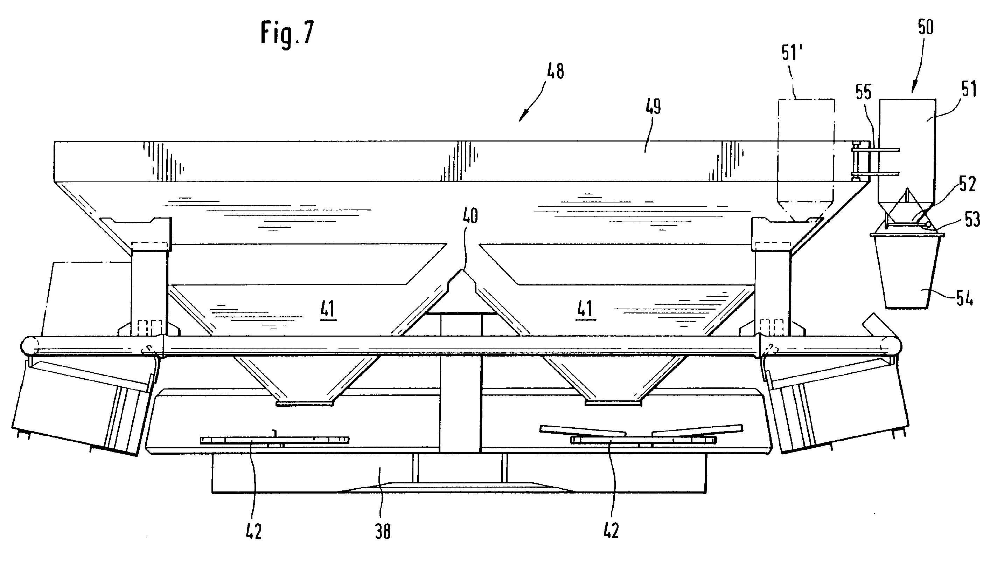

Die Fig. 8 zeigt einen weiteren Schleuderdüngerstreuer 48. Dieser Schleuderdüngerstreuer 48 entspricht von seinem Aufbau her dem Schleuderdüngerstreuer gemäß Fig. 7, so daß hier gleich Bezugszeichen, soweit es sich um gleiche Bauteile handelt, verwendet sind. Seitlich an dem Vorratsbehälter 49 ist die Meßvorrichtung 50 angeordnet, mittels welcher das Fließverhalten des Düngers bzw. die Abdrehprobe durchführbar ist. Diese Vorrichtung 50 weist den Meßbehälter 51 auf, der in seinem Boden 52 eine Auslauföffnung aufweist. Diese Auslauföffnung 52 ist über den Schieber 43 zu öffnen bzw. zu verschließen. Weiterhin ist unterhalb des Meßbehälters 51 der Meßeimer 54 anzuordnen, um den Dünger beim Meßvorgang aufzufangen. Über die Halterung 52 ist der Meßbehälter 55 klappbar am Vorratsbehälter angordnet, so daß er zum Transport in die mit strichpunktierten Linien angedeutete Stellung 51' schwenkbar ist.

## Patentansprüche

1. Verfahren zum Einstellen der Dosierorgane (8) einer Verteilmaschine anhand der bei der Abdrehprobe gefundenen Werte, dadurch gekennzeichnet, daß die Abdrehprobe an einem separaten Dosierorgan (16,45,52) durchgeführt wird und die hierbei gefundenen Werte auf die Einstellung der Dosierorgane (8) der Verteilmaschine übertragen werden.

2. Verfahren nach Anspruch 1, dadurch gekennzeichnet, daß die an dem separaten Dosierorgan (16,45,52) gefundenen Werte mittels eines Umrechnungsverfahrens auf die Werte zum Einstellen der Dosierorgane (8) der Verteilmaschine umgewandelt werden.

3. Verfahren nach Anspruch 1, dadurch gekennzeichnet, daß die für verschiedene Materialien beim Eichen des für den Abdrehvorgang vorgesehenen Dosierorganes (16,45,52) gefundenen Werte in Bezug zu den beim Eichvorgang für die den Verteilorganen zudosierenden Dosierorgane (8) gefundenen Wert gesetzt werden, und daß die Dosierorgane (8) aufgrund der Beziehungen der beim aktuellen Abdrehen gefundenen Werte eingestellt werden.

4. Verfahren nach einem oder mehreren der vorstehenden Ansprüche, dadurch gekennzeichnet, daß die Dosierorgane (8) durch als Schieber (7) zu öffnende und zu verschließende Auslauföffnungen (6) ausgebildet sind, daß ein funktioneller Zusammenhang gebildet wird zwischen dem Auslaufverhalten bei der separaten Auslauföffnung (17,45,52) sowie dem Auslaufverhalten bei den den Verteilorganen (13,42) zugeordneten Auslauföffnungen (6) (Nomogramm 29).

5. Verfahren nach einem oder mehreren der vorstehenden Ansprüche, dadurch gekennzeichnet, daß an der für das Abdrehen vorgesehenen Auslauföffnung (17,45,52) nur eine Einstellung vorgesehen ist, und daß mit dem beim Abdrehen gefundenen Wert bzgl. des Auslaufverhaltens die Einstellwerte für die den Verteilorganen (13,42) zugeordneten Auslauföffnungen (6) ermittelt werden.

6. Verteilmaschine zur Durchführung der Verfahren nach einem oder mehreren der Ansprüche 1 bis 5, wobei die Verteilmaschine einen Vorratsbehälter (2,39,49) mit Dosierorganen (8) aufweist, über welche das auszubringende Material unterhalb der Dosierorgane (8) angeordneten Verteilorganen (13,42) zugeführt wird, wobei zusätzlich zu den den Verteilorganen (13,42) zugeordneten Dosierorganen (8) ein separates Dosierorgan (16,45,52) zum Durchführen der Abdrehprobe vorgesehen ist, dadurch gekennzeichnet, daß dieses Dosierorgan (16) als mit einem Schieber (18) zu öffnende und verschließende Auslauföffnung (17) ausgebildet ist, und daß die den Verteilorganen (13) zugeordneten Dosierorgane (8) als über Schieber (7) in ihrer Öffnungsweite einstellbare Auslauföffnungen (6) ausgebildet sind.

7. Verteilmaschine nach Anspruch 6, dadurch gekennzeichnet, daß das separate Dosierorgan (16) an der Verteilmaschine bzw. am Vorratsbehälter (2,39,49) angeordnet ist.

8. Verteilmaschine nach Anspruch 6, dadurch gekennzeichnet, daß die zum Abdrehen vorgesehene separate Auslauföffnung konstruktiv genauso ausgebildet ist, wie die den Verteilorganen zugeordneten Auslauföffnungen.

9. Verteilmaschine nach einem oder mehreren der vorstehenden Ansprüche, dadurch gekennzeichnet, daß sich an der separaten Auslauföffnung (17) nur eine einzige Einstellung einstellen läßt.

10. Verteilmaschine nach einem oder mehreren der vorstehenden Ansprüche, dadurch gekennzeichnet, daß der Schieber (18) an der separaten Auslauföffnung (17) manuell betätigt werden kann.

11. Verteilmaschine nach einem oder mehreren der vorstehenden Ansprüche, dadurch gekennzeichnet, daß der Schieber (18) der separaten Auslauföffnung mittels einer Fernbedienungsvorrichtung betätigbar ist.

12. Verteilmaschine nach einem oder mehreren der vorstehenden Ansprüche, dadurch gekennzeichnet, daß die dem separaten Schieber (18) zugeordnete Fernbedienungseinrichtung hydraulisch oder elektrisch oder pneumatisch oder mechanisch ausgebildet ist.

13. Verteilmaschine nach einem oder mehreren der vorstehenden Ansprüche, dadurch gekennzeichnet, daß der Schieber (18) der separaten Auslauföffnung (17) durch eine Feder (25) in Schließstellung gezogen wird.

## Claims

1. Method of adjusting the dosing means (8) of a distributor by utilising the values found during the turning-off test, characterised in that the turning-off test is effected on a separate dosing means (16, 45, 52), and the values found therein are used for the adjustment of the dosing means (8) of the distributor.

2. Method according to claim 1, characterised in that the values found on the separate dosing means (16, 45, 52) are converted, by means of a conversion process, to the values for the adjustment of the dosing means (8) of the distributor.

3. Method according to claim 1, characterised in that the values found for various materials during the calibration of the dosing means (16, 45, 52), which is provided for the turning-off operation, are set with reference to the value found during the calibrating process for the dosing means (8) which supply doses to the distributing means, and in that the dosing means (8) are adjusted on the basis of the relationships between the values found during the actual turning-off operation.

4. Method according to one or more of the preceding claims, characterised in that the dosing means (8) are formed by discharge apertures (6), which are to open and close as slides (7), in that a functional connection is formed between the discharge behaviour in the case of the separate discharge aperture (17, 45, 52) and the discharge behaviour in the case of the discharge apertures (6) which are to be associated with the distributing means (13, 42) (nomograph 29).

5. Method according to one or more of the preceding claims, characterised in that only one adjustment is provided at the discharge aperture (17, 45, 52) provided for the turning-off operation, and in that the adjustment values for the discharge apertures (6), which are associated with the distributing means (13, 42), are determined with the value found during the turning-off operation relating to the discharge behaviour.

6. Distributor for accomplishing the method according to one or more of claims 1 to 5, the distributor having a hopper (2, 39, 49) with dosing means (8), via which the material to be distributed is supplied to distributing means (13, 42) disposed beneath the dosing means (8), a separate dosing means (16, 45, 52) being provided for effecting the turning-off test in addition to the dosing means (8) associated with the distributing means (13, 42), characterised in that this dosing means (16) is formed as discharge aperture (17), which is to be opened and closed by means of a slide (18), and in that the dosing means (8), which are associated with the distributing means (13), are formed as discharge apertures (6) which are adjustable in respect of their width of opening via slides (7).

7. Distributor according to claim 6, characterised in that the separate dosing means (16) is disposed on the distributor, or respectively on the hopper (2, 39, 49).

8. Distributor according to claim 6, characterised in that the design of the separate discharge aperture, which is provided for the turning-off operation, is identical to that of the discharge apertures associated with the distributing means.

9. Distributor according to one or more of the preceding claims, characterised in that only one single adjustment can be selected at the separate discharge aperture (17).

10. Distributor according to one or more of the preceding claims, characterised in that the slide (18) at the separate discharge aperture (17) may be manually actuated.

11. Distributor according to one or more of the preceding claims, characterised in that the slide (18) of the separate discharge aperture is actuatable by means of a remote control device.

12. Distributor according to one or more of the preceding claims, characterised in that the remote control device, associated with the separate slide (18), is hydraulic or electrical or pneumatic or mechanical.

13. Distributor according to one or more of the preceding claims, characterised in that the slide (18) of the separate discharge aperture (17) is drawn into the closed position by a spring (25).

## Revendications

1. Procédé de réglage des organes de dosage (8) d'un distributeur ou épandeur à l'aide des grandeurs trouvées au cours d'un essai de distribution, procédé caractérisé en ce qu'on effectue l'essai de distribution à l'aide d'un organe de dosage distinct (16, 45, 52) et on transpose les valeurs ainsi trouvées au réglage des organes de dosage (8) de l'épandeur ou distributeur.

2. Procédé selon la revendication 1, caractérisé en ce qu'on transforme les valeurs trouvées pour l'organe de dosage distinct (16, 45, 52) à l'aide d'un procédé de conversion par calcul en des valeurs servant à régler des organes de dosage (8) de l'épandeur ou du distributeur.

3. Procédé selon la revendication 1, caractérisé en ce que pour les différents produits, lors du tarage de l'organe de dosage (16, 45, 52) prévu pour l'essai de distribution, les valeurs trouvées sont mises en relation avec la valeur trouvée lors de l'opération de tarage des organes de dosage (8) alimentant les organes distributeurs et les organes de dosage (8) sont réglés à l'aide des relations en fonction des valeurs trouvées pour l'essai réel de distribution.

4. Procédé selon l'une ou plusieurs des revendications précédentes, caractérisé en ce que les organes de dosage (8) sont constitués par des ouvertures de sortie (6) qui se ferment ou s'ouvrent par des tiroirs (7) et on forme une relation fonctionnelle entre le comportement de sortie pour l'orifice de sortie distinct (17, 45, 52) et le comportement de sortie des orifices de sortie (6) associés aux organes de dosage (13, 43) (abaque 29).

5. Procédé selon l'une ou plusieurs des revendications précédentes, caractérisé en ce que sur l'orifice de sortie (17, 45, 52) prévu pour l'essai de distribution, on ne prévoit qu'un réglage et la valeur trouvée au cours de l'essai de distribution ou le comportement de distribution, permet de déterminer les valeurs de réglage des orifices de sortie (6) associés aux organes de distribution (13, 42).

6. Distributeur pour la mise en oeuvre du procédé selon l'une ou plusieurs des revendications 1 à 5, caractérisé en ce qu'il comprend un réservoir (2, 39, 49) avec des organes de dosage (8) qui permettent de fournir le produit à doser à des organes distributeurs (13, 42) placés sous les organes de dosage (8) et plus des organes de dosage (8) associés aux organes distributeurs (13, 42) il est prévu un organe de dosage distinct (16, 45, 52) pour effectuer un essai de distribution, distributeur caractérisé en ce que cet organe de dosage (16) est réalisé sous la forme d'un orifice de sortie (17) qui s'ouvre et se ferme à l'aide d'un tiroir (18) et les organes de dosage (18) associés aux organes distributeurs (13) sont réalisés sous la forme d'orifices de sortie (6) dont le degré d'ouverture se règle par les tiroirs (7).

7. Distributeur selon la revendication 6, caractérisé en ce que l'organe de dosage distinct (16) est prévu sur l'épandeur ou sur le réservoir (2, 39, 49).

8. Distributeur selon la revendication 6, caractérisé en ce que l'orifice de sortie, distinct, prévu pour l'essai de distribution, est réalisé exactement suivant la même construction que les orifices de sortie associés aux organes distributeurs.

9. Distributeur selon une ou plusieurs des revendications précédentes, caractérisé par un seul réglage possible sur l'orifice de sortie distinct (17).

10. Distributeur selon une ou plusieurs des revendications précédentes, caractérisé en ce que le tiroir (18) est actionné manuellement sur l'orifice de sortie distinct (17).

11. Distributeur selon une ou plusieurs des revendications précédentes, caractérisé en ce que le tiroir (18) de l'orifice de sortie distinct est actionné par un dispositif de télécommande.

12. Distributeur selon une ou plusieurs des revendications précédentes, caractérisé en ce que le dispositif de télécommande associé au tiroir distinct (18) est un dispositif hydraulique ou électrique ou pneumatique ou mécanique.

13. Distributeur selon une ou plusieurs des revendications précédentes, caractérisé en ce que le tiroir (18) de l'orifice de sortie distinct (17) est tiré en position de fermeture par un ressort (25).
